# EUROPEAN PATENT APPLICATION

(11) **EP 4 435 882 A1**
(43) Date of publication of application: **25.09.2024**
(21) Application number: 22911965.6
(22) Date of filing: 22.12.2022
(51) Int. Cl.: H01M 4/13, H01M 4/131, H01M 4/36, H01M 4/525, H01M 4/505, H01M 4/62, H01M 10/052, H01M 4/02

(54) **POSITIVE ELECTRODE FOR LITHIUM SECONDARY BATTERY, AND LITHIUM SECONDARY BATTERY COMPRISING SAME**

(30) Priority: 22.12.2021 KR 20210184677
(71) Applicant: LG Energy Solution, Ltd., Seoul 07335 (KR)
(72) Inventor: LHO, Eun Sol, Daejeon 34122 (KR); HAN, Gi Beom, Daejeon 34122 (KR); KIM, Jong Woo, Daejeon 34122 (KR); JUNG, Wang Mo, Daejeon 34122 (KR); PARK, Sang Min, Daejeon 34122 (KR); LEE, Sang Wook, Daejeon 34122 (KR); KIM, Seul Ki, Daejeon 34122 (KR); KIM, Hyeong Il, Daejeon 34122 (KR)
(74) Representative: Hoffmann Eitle
(86) International application number: PCT/KR2022/021045
(87) International publication number: WO 2023/121332

(57) **Abstract**

The present invention relates to a positive electrode for a lithium secondary battery including: a collector; and a positive electrode active material layer disposed on at least one surface of the collector, wherein the ratio of a peak intensity of a (003) plane to a peak intensity of a (101) plane of the positive electrode measured by X-ray diffraction analysis is 8 or more.

## Description

### TECHNICAL FIELD

This application claims the benefit of Korean Patent Application No. 10-2021-0184677, filed on December 22, 2021, the disclosure of which is incorporated herein in its entirety by reference.

The present invention relates to a positive electrode for a lithium secondary battery and a lithium secondary battery including the same, and more specifically, to a positive electrode for a lithium secondary battery in which a ratio I₍₀₀₃₎/I₍₁₀₁₎ of a peak intensity I₍₀₀₃₎ of a (003) plane to a peak intensity I₍₁₀₁₎ of a (101) plane measured by X-ray diffraction analysis is 8 or more.

### BACKGROUND ART

Recently, with the rapid spread of electronic devices using batteries, such as mobile phones, notebook computers, and electric vehicles, demand for secondary batteries with relatively high capacity as well as small size and lightweight has been rapidly increased. Since a lithium secondary battery is lightweight and has high energy density, the lithium secondary battery is in the spotlight as a driving power source for portable devices. Accordingly, research and development efforts for improving the performance of the lithium secondary battery have been actively conducted.

The demand for high-output and high-capacity batteries, such as electric vehicle batteries, has recently increased, and accordingly, the nickel content in the positive electrode active material is gradually increasing. However, when the nickel content in the positive electrode active material increases, the initial capacity characteristics may be improved, but the thermal stability may be deteriorated, and the amount of gas generated due to the side reaction with the electrolyte during the electrochemical reaction may increase.

In addition, when the nickel content in the positive electrode active material increases, structural degradation of the active material is generated during charging and discharging, and a volume change in unit lattice increases. The volume change causes cracks in the active material, and as charging and discharging are repeated, the crack generation is accelerated, and defects (*e*.*g*., voids, *etc*.) in which the electrolyte cannot reach or the conductivity is low are generated.

In particular, in the case of a lithium secondary battery including a high-nickel positive electrode active material containing 80 wt% or more of nickel among transition metals in the positive electrode active material, phase transition of the active material occurs around 4.2 V, resulting in rapid contraction of the lattice. Thus, there is a limitation in that the degradation rate of the positive electrode active material increases, the life characteristics of the battery deteriorate, and the continuous charging characteristics deteriorate.

In order to solve the above limitation, there has been an effort to minimize the structural change through forming a coating layer on the positive electrode active material or doping, but there has been difficulty in preventing the degradation of the active material only by coating and doping.

### DISCLOSURE OF THE INVENTION

### TECHNICAL PROBLEM

An aspect of the present invention provides a positive electrode and a lithium secondary battery having improved high-temperature life characteristics and continuous charging characteristics.

### TECHNICAL SOLUTION

According to an aspect of the present invention, there is provided a positive electrode for a lithium secondary battery including: a collector; and a positive electrode active material layer disposed on at least one surface of the collector, wherein the ratio I₍₀₀₃₎/I₍₁₀₁₎ of a peak intensity I₍₀₀₃₎ of a (003) plane to a peak intensity I₍₁₀₁₎ of a (101) plane of the positive electrode measured by X-ray diffraction analysis is 8 or more.

In addition, the positive electrode active material layer may include a first positive electrode active material and a second positive electrode active material, and the first positive electrode active material may include a first lithium composite transition metal oxide in the form of a single particle composed of a single primary particle, or a quasi-single particle which is an aggregate of at most 10 primary particles.

In addition, the positive electrode may have a ratio I₍₀₀₃₎/I₍₁₀₁₎ of the peak intensity I₍₀₀₃₎ of the (003) plane to the peak intensity I₍₁₀₁₎ of the (101) plane measured by X-ray diffraction analysis of 8 to 16.

In addition, the first lithium composite transition metal oxide may have a composition represented by Formula 1 below:

[Formula 1] Liₐ₁Ni_{b1}Co_{c1}M¹_{d1}M²ₑ₁O₂

In Formula 1 above, M¹ is at least one selected from among Mn and Al, M² is at least one selected from the group consisting of Zr, W, Ti, Mg, Ca, Sr, and Ba, 0.8≤a1≤1.2, 0.75≤b1<1, 0<c1<0.25, 0<d1<0.25, and 0≤e1≤0.1.

In addition, the first positive electrode active material may further include a coating layer disposed on the surface of the first lithium composite transition metal oxide, and the coating layer may include at least one coating element selected from the group consisting of Al, Ti, W, B, F, P, Mg, Ni, Co, Fe, Cr, V, Cu, Ca, Zn, Zr, Nb, Mo, Sr, Sb, Bi, Si, and S.

In addition, the weight ratio of the first positive electrode active material and the second positive electrode active material may be 1:0.5 to 3.

In addition, according to another aspect of the present invention, there is provided a lithium secondary battery including a positive electrode for the lithium secondary battery; a negative electrode facing the positive electrode for the lithium secondary battery; a separator interposed between the positive electrode for the lithium secondary battery and the negative electrode; and an electrolyte.

### ADVANTAGEOUS EFFECTS

When the positive electrode of the present invention in which I₍₀₀₃₎/I₍₁₀₁₎ is high, at least 8, is applied, a lithium secondary battery having excellent high-temperature life characteristics and continuous charging characteristics may be achieved. The positive electrode in which I₍₀₀₃₎/I₍₁₀₁₎ of the positive electrode is high, at least 8, has high (003) plane orientation in the positive electrode, thereby being structurally stable and advantageous for intercalation/deintercalation of lithium ions. Therefore, structural collapse due to intercalation/deintercalation of lithium ions during charging and discharging is less and lithium mobility is excellent, and thus excellent high temperature life characteristics and continuous charging performance can be achieved.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.

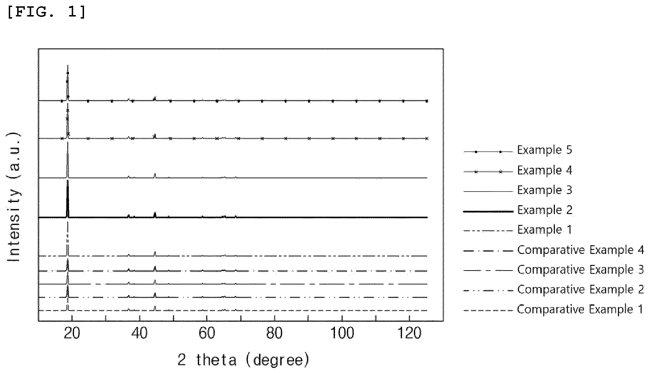

FIG. 1 is a graph showing X-ray diffraction analysis results of the positive electrodes prepared by Examples 1-5 and Comparative Examples 1-4.

### BEST MODE FOR CARRYING OUT THE INVENTION

Hereinafter, it will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

As used herein, the term "primary particle" refers to a particle unit in which an external grain boundary does not exist when observed in the view at a magnification of 5,000 to 20,000 using a scanning electron microscope. The term "average particle diameter of the primary particles" refers to an arithmetic mean value of the particle diameters calculated by measuring the particle diameters of the primary particles observed in the scanning electron microscope image.

As used herein, the term "secondary particle" is a particle formed by the aggregation of a plurality of primary particles. For the purpose of distinction, according to the present invention, a particle in which primary 2 to 30 particles are aggregated is referred to as a quasi-single particle, and a particle in which the number of the aggregation of primary particles is greater than 30 is referred to as a secondary particle.

The expression "average particle diameter D₅₀" in the present invention may mean a particle size at a cumulative volume of 50% in a particle size distribution curve of the positive electrode active material powder, and may be measured by using a laser diffraction method. For example, the positive electrode active material powder may be dispersed in a dispersion medium, then introduced into a commercially available laser diffraction particle size measuring apparatus (e.g., Microtrac MT 3000), irradiated with an ultrasonic wave of about 28 kHz at a 60-W output. Then, after a volume cumulative particle size distribution graph may be obtained, a particle size corresponding to 50% of the volume cumulative amount may be determined to measure the average particle diameter D₅₀.

According to the present invention, the (101) plane peak intensity and the (003) plane peak intensity of the positive electrode may be measured by cutting the positive electrode into an appropriate size to prepare a sample, mounting the sample on a Bruker D8 Endeavor (Cu Kα, λ=1.54Å) equipped with LynxEye XE-T position sensitive detector, and performing X-ray diffraction analysis under the conditions of FDS=0.5°, 20=15-90°, step size=0.02°, and total scan time=20 minutes.

### Positive Electrode

As a result of a significant amount of research conducted for developing a lithium secondary battery having improved high-temperature life characteristics and continuous charging characteristics, the present inventors have found that when the positive electrode satisfies a specific orientation condition, specifically, when the ratio of the (003) plane peak intensity to the (101) plane peak intensity of the positive electrode is 8 or more, the high-temperature life characteristics and the continuous charging characteristics may be significantly improved, and have completed the present invention.

The high ratio of the (003) plane peak intensity to the (101) plane peak intensity of the positive electrode means high orientation of the (003) plane in the positive electrode, and it is guessed that the change in the crystal structure during charging and discharging decreases when the orientation of the (003) plane in the positive electrode is increased, and thus the high-temperature life characteristics and continuous charging characteristics are improved.

Meanwhile, the ratio of the (003) plane peak intensity to the (101) plane peak intensity of the positive electrode varies with a combination of a mixing ratio of the positive electrode active material included in the positive electrode, a particle diameter, a composition, an electrode preparation process, and the like. For example, it may vary with the particle shape of the positive electrode active material, the composition of the positive electrode active material, the presence or absence of a coating layer, the type of coating element, and/or the degree of rolling during the preparation of the electrode.

Specifically, the positive electrode for a lithium secondary battery according to the present invention includes a collector and a positive electrode active material layer disposed on at least one surface of the collector, wherein the ratio of the (003) plane peak intensity to the (101) plane peak intensity measured by X-ray diffraction analysis is 8 or more. More specifically, the positive electrode may have a ratio of the (003) plane peak intensity to the (101) plane peak intensity measured by X-ray diffraction analysis of 8 to 16, preferably 9 to 15, and more preferably 13 to 15. When the ratio of the (003) plane peak intensity to the (101) plane peak intensity satisfies the above range, the structural stability of the positive electrode is improved, and thus the high-temperature life characteristics and the continuous charging characteristics of the lithium secondary battery including the positive electrode may be improved.

Meanwhile, the positive electrode includes a collector and a positive electrode active material layer disposed on at least one surface of the collector.

In this case, the positive electrode collector may include a metal having high conductivity, and is not particularly limited as long as the positive electrode active material layer may be easily bonded, and there is no reactivity in the voltage range of the battery. For example, stainless steel, aluminum, nickel, titanium, fired carbon, or aluminum or stainless steel that is surface-treated with one of carbon, nickel, titanium, silver, or the like may be used as the positive electrode collector. Also, the positive electrode collector may typically have a thickness of 3 um to 500pm, and microscopic irregularities may be formed on the surface of the collector to improve the adhesion of the positive electrode active material. For example, the positive electrode current collector may be used in various forms such as a film, a sheet, a foil, a net, a porous body, a foam, and a non-woven body.

The positive electrode active material layer may include two types of positive electrode active materials having different average particle diameters, particle shapes, and/or compositions. For example, the positive electrode active material layer may include a first positive electrode active material and a second positive electrode active material.

The first positive electrode active material may include a first lithium composite transition metal oxide in the form of a single particle composed of a single primary particle, or a quasi-single particle which is an aggregate of at most 10 primary particles.

Conventionally, it is common to use spherical secondary particles in which tens to hundreds of primary particles are aggregated as a positive electrode active material of a lithium secondary battery. However, in the case of the positive electrode active material in the form of a secondary particle in which many primary particles are aggregated as described above, particle breakage, in which the primary particles fall off in a rolling process during the preparation of a positive electrode, is easy to occur and cracks may occur inside the particles during charging and discharging.

In contrast, the positive electrode active material in the form of a single particle composed of a single primary particle, or a quasi-single particle in which 2-30 primary particles are aggregated has higher particle strength than conventional positive electrode active materials in the form of secondary particles, and thus the particle breakage rarely occurs during the rolling. Also, in the case of the positive electrode active material in the form of a single particle or a quasi-single particle, the number of primary particles constituting the particles is small so that there is little change due to volume expansion and contraction of the primary particles during charging and discharging, and accordingly the occurrence of cracks inside the particles may be significantly reduced.

The first lithium composite transition metal oxide may have a composition represented by Formula 1 below.

[Formula 1] Liₐ₁Ni_{b1}Co_{c1}M¹_{d1}M²ₑ₁O₂

In Formula 1 above, M¹ may be at least one selected from among Mn and Al, and preferably, Mn, or Mn and Al.

M² above may be at least one selected from the group consisting of Zr, W, Ti, Mg, Ca, Sr, and Ba, preferably at least one selected from the group consisting of Zr, Y, Mg, and Ti, and more preferably Zr, Y, or a combination thereof. The M² element is not necessarily included, but when included in an appropriate amount, the M² element may serve to promote particle growth during the sintering or improve the crystal structure stability.

a1 above denotes a molar ratio of the lithium in the first lithium composite transition metal oxide, and may satisfy 0.8≤a1≤1.2, 0.85≤a1≤1.15, or 0.9≤a1≤1.2. When the molar ratio of lithium satisfies the above range, the crystal structure of the first lithium composite transition metal oxide may be stably formed.

b1 above denotes a molar ratio of nickel among all metals excluding lithium in the first lithium composite transition metal oxide, and may satisfy 0.75≤b1<1, 0.77≤b1<1, or 0.79≤b1<1. When the molar ratio of nickel satisfies the above range, high energy density may be exhibited and high capacity may be achieved.

c1 above denotes a molar ratio of cobalt among all metals excluding lithium in the first lithium composite transition metal oxide, and may satisfy 0<c1<0.25, 0<c1<0.23, or 0.01≤c1≤0.21. When the molar ratio of cobalt satisfies the above range, good resistance characteristics and output characteristics may be achieved.

d1 above denotes a molar ratio of the M¹ element among all metals excluding lithium in the first lithium composite transition metal oxide, and may satisfy 0<d1<0.25, 0<d1<0.23, or 0.01≤d1≤0.21. When the molar ratio of the M¹ element satisfies the above range, the positive electrode active material exhibits excellent structural stability.

e1 above denotes a molar ratio of the M² element among all metals excluding lithium in the lithium composite transition metal oxide, and may satisfy 0≤e1≤0.1, or 0≤e1≤0.05.

The first positive electrode active material may have an average particle diameter (D₅₀) of 2 um to 8 um, preferably 3 um to 6 µm, and more preferably 3 um to 5 um. When the average particle diameter (D₅₀) of the first positive electrode active material satisfies the above range, the difference in particle size between the first positive electrode active material and the second positive electrode active material which will described later may be appropriately set, so that the particle breakage may be reduced during the rolling and the rolling density of the positive electrode may be improved. Accordingly, high-temperature life characteristics and continuous charging characteristics of the lithium secondary battery including the positive electrode may be improved.

In addition, the first positive electrode active material may further include a coating layer disposed on the surface of the first lithium composite transition metal oxide, and the coating layer may include at least one coating element selected from the group consisting of Al, Ti, W, B, F, P, Mg, Ni, Co, Fe, Cr, V, Cu, Ca, Zn, Zr, Nb, Mo, Sr, Sb, Bi, Si, and S. Specifically, the coating layer may mean the surface of the primary particle of the first lithium composite transition metal oxide, and may mean a coating layer positioned on the surface of the secondary particle of the first lithium composite transition metal oxide. Since the first positive electrode active material includes the coating layer containing the coating element, even if the first positive electrode active material is separated in the form of primary particles when rolling the collector and the positive electrode active material layer according to the present invention, the surface of the first lithium composite transition metal oxide is protected by the coating layer, and thus surface reactivity may be reduced to suppress a side reaction between the positive electrode active material layer and the electrolyte. Accordingly, the high-temperature life characteristics and continuous charging characteristics of the lithium secondary battery including the positive electrode may be improved.

More specifically, the coating layer may include at least one coating element selected from the group consisting of Ti, Co, Fe, Cr, V, Cu, and Mo, preferably, may include at least one coating element selected from the group consisting of B, Co, Fe, and Cr, and more preferably, may include at least one coating element selected from the group consisting of B and Co. The coating layer may suppress the surface reactivity of the first lithium composite transition metal oxide by containing the coating element, and in particular, when the first lithium composite transition metal oxide has the form of a single particle/quasi-single particle, it may be preferable in that the stability of the single particle may be improved.

In an embodiment of the present application, when the positive electrode active material layer includes the first positive electrode active material and the second positive electrode active material, the first positive electrode active material includes the first lithium composite transition metal oxide in the form of a single particle or a quasi-single particle, and the first positive electrode active material further includes the coating layer disposed on the surface of the first lithium composite transition metal oxide, the structural stability of the rolled positive electrode may be maintained even when the positive electrode active material layer is rolled, and the first positive electrode active material includes the coating layer, thereby reducing the surface reactivity, and thus the structural stability of the positive electrode may be further improved.

Accordingly, when the positive electrode is prepared by rolling the positive electrode active material layer, the positive electrode may be structurally stable, and when the positive electrode is impregnated with an electrolyte, a side reaction between the positive electrode and the electrolyte may be suppressed to reduce an amount of gas generated inside the battery, and the stability, particularly, the high-temperature life characteristics and continuous charging characteristics of the lithium secondary battery including the positive electrode and the electrolyte may be significantly improved.

Next, the second positive electrode active material may include a second lithium composite transition metal oxide in the form of a secondary particle in which more than 30 primary particles are aggregated. Specifically, the second positive electrode active material may be a spherical secondary particle in which tens to hundreds of primary particles conventionally utilzed as a positive electrode active material are aggregated. However, according to the present invention, the second positive electrode active material is not used alone, and the first positive electrode active material and the second positive electrode active material are used together, so that the particle breakage may be reduced during the rolling, and the rolling density and structural stability of the positive electrode may be improved. Accordingly, the high-temperature life characteristics and continuous charging characteristics of the lithium secondary battery including the positive electrode may be improved.

The second lithium composite transition metal oxide may have a composition represented by Formula 2 below.

[Formula 2] Liₐ₂Ni_{b2}Co_{c2}M³_{d2}M⁴ₑ₂O₂

In Formula 2 above, M³ is at least one selected from among Mn and Al, M⁴ is at least one selected from the group consisting of Zr, W, Ti, Mg, Ca, Sr, and Ba, 0.8≤a2≤1.2, 0.75≤b2<1, 0<c2<0.25, 0<d2<0.25, and 0≤e2≤0.1.

In Formula 1 above, M³ may be at least one selected from among Mn and Al, and preferably, Mn, or Mn and Al.

M⁴ above may be at least one selected from the group consisting of Zr, W, Ti, Mg, Ca, Sr, and Ba, preferably at least one selected from the group consisting of Zr, Y, Mg, and Ti, and more preferably Zr, Y, or a combination thereof. The M⁴ element is not necessarily included, but when included in an appropriate amount, the M⁴ element may serve to promote particle growth during the sintering or improve the crystal structure stability.

a2 above denotes a molar ratio of the lithium in the second lithium composite transition metal oxide, and may satisfy 0.8≤a2≤1.2, 0.85≤a2≤1.15, or 0.9≤a2≤1.2. When the molar ratio of lithium satisfies the above range, the crystal structure of the second lithium composite transition metal oxide may be stably formed.

b2 above denotes a molar ratio of nickel among all metals excluding lithium in the second lithium composite transition metal oxide, and may satisfy 0.75≤b2<1, 0.77≤b2<1, or 0.79≤b2<1. When the molar ratio of nickel satisfies the above range, high energy density may be exhibited and high capacity may be achieved.

c2 above denotes a molar ratio of cobalt among all metals excluding lithium in the second lithium composite transition metal oxide, and may satisfy 0<c2<0.25, 0<c2<0.23, or 0.01≤c2≤0.21. When the molar ratio of cobalt satisfies the above range, good resistance characteristics and output characteristics may be achieved.

d2 above denotes a molar ratio of the M³ element among all metals excluding lithium in the second lithium composite transition metal oxide, and may satisfy 0<d2<0.25, 0<d2<0.23, or 0.01≤d2≤0.21. When the molar ratio of the M³ element satisfies the above range, the positive electrode active material exhibits excellent structural stability.

e2 above denotes a molar ratio of the M⁴ element among all metals excluding lithium in the second lithium composite transition metal oxide, and may satisfy 0≤e2≤0.1, or 0≤e2≤0.05.

The second positive electrode active material may have an average particle diameter (D₅₀) of 8 um to 20 um, and specifically, 9 µm to 15 um. When the average particle diameter (D₅₀) of the second positive electrode active material satisfies the above range, the difference in particle size between the first positive electrode active material and the second positive electrode active material may be appropriately set, so that the particle breakage may be reduced during the rolling and the rolling density of the positive electrode may be improved. Accordingly, high-temperature life characteristics and continuous charging characteristics of the lithium secondary battery including the positive electrode may be improved.

Meanwhile, a weight ratio of the first positive electrode active material and the second positive electrode active material may be 1:0.5 to 3, particularly 1:0.8 to 2.5, and more particularly 1:1 to 2. When the numerical range is satisfied, the first positive electrode active material having a relatively small average particle diameter and the second positive electrode active material having a relatively large average particle diameter are mixed at an appropriate ratio, thereby improving the structural stability, and when the positive electrode active material layer including the first positive electrode active material and the second positive electrode active material is rolled, the particle breakage may be reduced and the rolling density may be improved. Accordingly, the high-temperature life characteristics and continuous charging characteristics of the lithium secondary battery may be improved.

Meanwhile, the positive electrode active material layer may optionally include a conductive agent and a binder together with the positive electrode active material as necessary.

In this case, the positive electrode active material may be included in a content of 80-99 wt%, more specifically 85-98.5 wt%, with respect to the total weight of the positive electrode active material layer, and may exhibit excellent capacity characteristics when included in the content range.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metals such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with Li, Na, or Ca, or various copolymers thereof, and any one thereof or a mixture of two or more thereof may be used. The binder may be included in an amount of 0.1 wt% to 15 wt% based on the total weight of the positive electrode active material layer.

Meanwhile, the positive electrode according to the present invention may be prepared by various methods for preparing a positive electrode known in the art, and the preparation method thereof is not particularly limited. For example, the positive electrode according to the present invention may be prepared by applying, on a positive electrode collector, a composition for forming a positive electrode active material layer prepared by dissolving or dispersing the above-described first positive electrode active material, second positive electrode active material, and optionally a binder, a conductive agent, and a dispersant in a solvent, followed by drying and rolling. As another method, the positive electrode may be prepared by casting the composition for forming a positive electrode active material layer on a separate support and then laminating a film separated from the support on the positive electrode collector.

In this case, the solvent may be a solvent normally used in the art. The solvent may include dimethyl sulfoxide (DMSO), isopropyl alcohol, N-methylpyrrolidone (NMP), dimethyl formamide (DMF), acetone, or water, and one thereof alone or a mixture of two or more thereof may be used. An amount of the solvent used may be sufficient if the solvent may dissolve or disperse the positive electrode active material, the conductive agent, the binder, and the dispersing agent in consideration of a coating thickness of the slurry and manufacturing yield, and may allow to have a viscosity that may provide excellent thickness uniformity during the subsequent coating for the preparation of the positive electrode.

### Electrochemical Device

Next, an electrochemical device according to the present invention will be described. The electrochemical device according to the present invention includes the positive electrode of the present invention as described above, and the electrochemical device may specifically be a battery, a capacitor, or the like, and more specifically, may be a lithium secondary battery.

Specifically, the lithium secondary battery may include the above-described positive electrode for a lithium secondary battery, a negative electrode facing the positive electrode for a lithium secondary battery, a separator interposed between the positive electrode for a lithium secondary battery and the negative electrode for a lithium secondary battery, and an electrolyte. Since the positive electrode is the same as described above, detailed descriptions thereof will be omitted, and the remaining configurations will be only described in detail below.

Also, the lithium secondary battery may further optionally include a battery container which accommodates an electrode assembly of the positive electrode, the negative electrode, and the separator, and a sealing member which seals the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, sintered carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and as in the case of the positive electrode collector, microscopic irregularities may be formed on the surface of the negative electrode collector to enhance the adhesion of a negative electrode active material. The negative electrode collector, for example, may be used in various shapes such as a film, a sheet, a foil, a net, a porous body, a foam body, and a non-woven fabric body.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiOβ (0 < β < 2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is commonly added in an amount of 0.1 wt% to 10 wt% based on the total weight of the negative electrode active material layer. Examples of the binder may include a polyvinylidene fluoride (PVDF), a polyvinyl alcohol, carboxymethylcellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, a nitrile-butadiene rubber, a fluoro rubber, various copolymers thereof, and the like.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery. For example, graphite such as natural graphite or artificial graphite; carbon black such as acetylene black, Ketjen black, channel black, furnace black, lamp black, and thermal black; conductive fibers such as carbon fibers or metal fibers; fluorocarbons; metal powder such as aluminum powder or nickel powder; a conductive whisker such as a zinc oxide whisker or a potassium titanate whisker; a conductive metal oxide such as a titanium oxide; or a conductive material such as a polyphenylene derivative; and the like may be used.

The negative electrode active material layer may be prepared by coating a negative electrode collector with a composition for forming a negative electrode active material layer, which is prepared by dissolving or dispersing the negative electrode active material, and optionally the binder and the conductive agent as well as the negative electrode active material in a solvent, and drying the coated negative electrode collector, or may be prepared by casting the composition for forming a negative electrode active material layer on a separate support and then laminating a film separated from the support on the negative electrode collector.

Meanwhile, in the lithium secondary battery, the separator separates the negative electrode and the positive electrode and provides a movement path of lithium ions, and any separator may be used as the separator without particular limitation as long as it is typically used as a separator in a lithium secondary battery, and particularly, a separator having high moisture-retention ability for an electrolyte as well as low resistance to the transfer of electrolyte ions may be preferred. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator containing a ceramic component or a polymer material may be used to secure heat resistance or mechanical strength, and the separator having a single-layered or multi-layered structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, anions of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, and (CF₃CF₂SO₂)₂N⁻, and as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. It is preferable to use the lithium salt in a concentration range of 0.1 M to 2.0 M. When the concentration of the lithium salt is in the above range, the electrolyte may have suitable conductivity and viscosity, thereby exhibiting excellent performance, and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

### MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

A lithium composite transition metal oxide A1 (Li[Ni_{0.80}Co_{0.10}Mn_{0.10}]O₂) which has a Co coating layer formed on the surface thereof and an average particle diameter D₅₀ of 4 pm, and is in the form of a single particle, was prepared as a first positive electrode active material.

Then, a lithium composite transition metal oxide B1 (Li[Ni_{0.80}Co_{0.10}Mn_{0.10}]O₂), which has an average particle diameter D₅₀ of 10 µm and is in the form of a secondary particle in which primary particles are aggregated, was prepared as a second positive electrode active material.

A mixture of the first positive electrode active material and the second positive electrode active material was prepared in a weight ratio of 3:7, and the mixture, Denka Black as a conductive agent, and a PVDF binder were mixed in a weight ratio of 96:2:2 in N-methylpyrrolidone to prepare a positive electrode slurry.

The positive electrode slurry was coated on one surface of an aluminum current collector sheet, dried at 130 °C, and then rolled to prepare a positive electrode. The porosity of the prepared positive electrode was measured as 24%.

### Example 2

A lithium composite transition metal oxide A1 (Li[Ni_{0.80}Co_{0.10}Mn_{0.10}]O₂) which has a Co coating layer formed on the surface thereof and an average particle diameter D₅₀ of 4 pm, and is in the form of a single particle, was prepared as a first positive electrode active material.

Then, a lithium composite transition metal oxide B2 (Li [Ni_{0.80}Co_{0.10}Mn_{0.10}]O₂), which has an average particle diameter D₅₀ of 15 µm and is in the form of a secondary particle in which primary particles are aggregated, was prepared as a second positive electrode active material.

A mixture of the first positive electrode active material and the second positive electrode active material was prepared in a weight ratio of 4:6, and the mixture, Denka Black as a conductive agent, and a PVDF binder were mixed in a weight ratio of 96:2:2 in N-methylpyrrolidone to prepare a positive electrode slurry.

The positive electrode slurry was coated on one surface of an aluminum current collector sheet, dried at 130 °C, and then rolled to prepare a positive electrode. The porosity of the prepared positive electrode was measured as 24%.

### Example 3

A lithium composite transition metal oxide A2 (Li[Ni_{0.80}Co_{0.10}Mn_{0.10}]O₂) which has a Co coating layer formed on the surface thereof and an average particle diameter D₅₀ of 5 pm, and is in the form of a single particle, was prepared as a first positive electrode active material.

Then, a lithium composite transition metal oxide B3 (Li [Ni_{0.80}Co_{0.10}Mn_{0.10}]O₂), which has an average particle diameter D₅₀ of 9 µm and is in the form of a secondary particle in which primary particles are aggregated, was prepared as a second positive electrode active material.

A mixture of the first positive electrode active material and the second positive electrode active material was prepared in a weight ratio of 4:6, and the mixture, Denka Black as a conductive agent, and a PVDF binder were mixed in a weight ratio of 96:2:2 in N-methylpyrrolidone to prepare a positive electrode slurry.

The positive electrode slurry was coated on one surface of an aluminum current collector sheet, dried at 130 °C, and then rolled to prepare a positive electrode. The porosity of the prepared positive electrode was measured as 24%.

### Example 4

A positive electrode was prepared in the same manner as in Example 1, except that a mixture in which the first positive electrode active material and the second positive electrode active material were mixed in a weight ratio of 5:5 was used.

### Example 5

A lithium composite transition metal oxide A1 (Li[Ni_{0.80}Co_{0.10}Mn_{0.10}]O₂) which has a boron coating layer formed on the surface thereof and an average particle diameter D₅₀ of 4 pm, and is in the form of a single particle, was prepared as a first positive electrode active material.

Then, a lithium composite transition metal oxide B2 (Li [Ni_{0.80}Co_{0.10}Mn_{0.10}]O₂), which has an average particle diameter D₅₀ of 15 µm and is in the form of a secondary particle in which primary particles are aggregated, was prepared as a second positive electrode active material.

A mixture of the first positive electrode active material and the second positive electrode active material was prepared in a weight ratio of 4:6, and the mixture, Denka Black as a conductive agent, and a PVDF binder were mixed in a weight ratio of 96:2:2 in N-methylpyrrolidone to prepare a positive electrode slurry.

The positive electrode slurry was coated on one surface of an aluminum current collector sheet, dried at 130 °C, and then rolled to prepare a positive electrode. The porosity of the prepared positive electrode was measured as 24%.

### Comparative Example 1

A positive electrode was prepared in the same manner as in Example 1, except that a lithium composite transition metal oxide B4 (Li[Ni_{0.80}Co_{0.10}Mn_{0.10}]O₂), which does not have a Co coating layer formed on the surface thereof, but has an average particle diameter D₅₀ of 4 µm and is in the form of a secondary particle in which primary particles are aggregated, was used as the first positive electrode active material.

### Comparative Example 2

A positive electrode was prepared in the same manner as in Example 1, except that a lithium composite transition metal oxide A3 (Li [Ni_{0.80}Co_{0.10}Mn_{0.10}]O₂), which does not have a Co coating layer formed on the surface thereof, but has an average particle diameter D₅₀ of 4 µm and is in the form of a single particle, was used as the first positive electrode active material.

### Comparative Example 3

A positive electrode was prepared in the same manner as in Example 1, except that a lithium composite transition metal oxide B5 (Li [Ni_{0.80}Co_{0.10}Mn_{0.10}]O₂), which has a Co coating layer formed on the surface thereof and an average particle diameter D₅₀ of 4 µm and is in the form of a secondary particle in which primary particles are aggregated, was used as the first positive electrode active material.

### Comparative Example 4

A positive electrode was prepared in the same manner as in Example 1, except that the positive electrode was rolled so that the porosity of the positive electrode became 30%.

### Experimental Example 1

The positive electrodes of Examples 1-5 and Comparative Examples 1-4 were subjected to x-ray diffraction (XRD) analysis as follows.

For X-ray diffraction analysis of the positive electrode, each positive electrode was cut into a circular shape having a size of 14Φ (in mm) to prepare a positive electrode sample.

Thereafter, Bruker D8 Endeavor (Cu Kα, λ=1.54Å) equipped with the LynxEye XE-T position sensitive detector was used, and the positive electrode sample was subjected to X-ray diffraction analysis so that the total scan time was 20 minutes at 0.02° of step size with respect to a region at 0.5° of FDS and 15-90° of 2-theta.

The experiment results of X-ray diffraction analysis of the positive electrodes of Examples 1 to 5 and Comparative Examples 1 to 4 are shown in FIG. 1 and Table 1 below.

### Experimental Example 2

The positive electrodes prepared in Examples 1-5 and Comparative Examples 1-4 and a lithium metal negative electrode having a thickness of 0.3 mm were prepared. A separator was interposed between each of the positive electrodes and the negative electrode to prepare an electrode assembly, and the electrode assembly was inserted in a battery case, and an electrolyte was injected thereinto to prepare a lithium secondary battery.

Each of the lithium secondary batteries as prepared above was charged at 0.33 C to 4.2 V at 50 °C and then discharged at 0.33 C to 3.0 V was defined as one cycle and capacity retention was measured by performing 50 cycles of charging and discharging.

In addition, the value of current, which was generated while each of the lithium secondary battery as prepared above was charged at 0.1 C to 4.7 V at 50 °C and maintained in the CV state for 200 hours, was measured.

Measurement results are shown in Table 1 below.

**[Table 1]**

| | (003) plane peak intensity / (101) plane peak intensity of positive electrode | Capacity retention (Number of cycles: 50) | Amount of current leaked |
|---|---|---|---|
| Example 1 | 12.95 | 97.6% | 0.056 mA |
| Example 2 | 14.52 | 98.7% | 0.029 mA |
| Example 3 | 8.96 | 96.1% | 0.087 mA |
| Example 4 | 13.51 | 97.8% | 0.050 mA |
| Example 5 | 13.95 | 98.2% | 0.060 mA |
| Comparative Example 1 | 4.44 | 89.2% | 0.289 mA |
| Comparative Example 2 | 7.23 | 92.0% | 0.196 mA |
| Comparative Example 3 | 5.85 | 91.1% | 0.266 mA |
| Comparative Example 4 | 5.27 | 89.6% | 0.069 mA |

Referring to the contents of Table 1 above, it may be confirmed that the ratio of the (003) plane peak intensity/the (101) plane peak intensity of the positive electrodes of Examples 1 to 5 is much greater than the ratio of the (003) plane peak intensity/the (101) plane peak intensity of the positive electrodes of Comparative Examples 1 to 4. In addition, it may be confirmed that the lithium secondary batteries using the positive electrodes of Examples 1-5, in which the ratio of the (003) plane peak intensity/the (101) plane peak intensity is 8 or more, have excellent high-temperature cycle characteristics due to at least 96% of the capacity retention after 50 cycles, and have excellent continuous charging performance due to the low amount, 0.087mA or less, of current leaked during continuous charging.

On the other hand, the lithium secondary batteries using the positive electrodes of Comparative Examples 1-4 in which the ratio of the (003) plane peak intensity/the (101) plane peak intensity is less than 8, have a capacity retention rate after 50 cycles of 92% or less, exhibiting high-temperature cycle characteristics lower than Examples 1-5, and the amount of current leaked during continuous charging much higher than Examples 1-5.

### Experimental Example 3

Each of the positive electrode active materials A1-A3 and B1-B5 used in Examples 1-5 and Comparative Examples 1-4 was subjected to X-ray diffraction analysis to measure the ratio of the (003) plane peak intensity/(101) plane peak intensity. Measurement results are shown in Table 2 below.

In this case, a positive electrode active material sample to be measured was put into the groove of a general powder holder by using Bruker D8 Endeavor (light source: Cu-Kα, λ=1.54Å) equipped with LynxEye XE-T-position sensitive detector, the surface of the sample was made even by using a slide glass, and the sample was filled such that the height of the sample corresponds to the edge of the holder, and then the X-ray diffraction analysis was performed with respect to the region at FDS 0.5°and 2θ=15-90° under the conditions of step size=0.02°and total scan time=about 20 minutes.

**[Table 2]**

| Division | D50 [µm] | Particle form | Presence/ absence of Co coating | (003) plane peak intensity / (101) plane peak intensity |
|---|---|---|---|---|
| A1 | 4 | Single particle | O | 3.95 |
| A2 | 5 | Single particle | O | 3.84 |
| A3 | 4 | Single particle | X | 3.75 |
| B1 | 10 | Secondary Particle | X | 3.67 |
| B2 | 15 | Secondary Particle | X | 3.68 |
| B3 | 9 | Secondary Particle | X | 3.67 |
| B4 | 4 | Secondary Particle | X | 3.65 |
| B5 | 4 | Secondary Particle | O | 3.72 |

As shown in Table 2 above, the ratio of the (003) plane peak intensity to the (101) plane peak intensity of each positive electrode active material is 3.65-3.95, this is not a big difference, but there occurred a big difference in the (003) plane orientation of the positive electrode after the preparation of the positive electrode depending on a mixing ratio of the positive electrode active material, a particle diameter, a composition, a degree of rolling, or the like.

## Claims

1. A positive electrode for a lithium secondary battery comprising:
a collector; and
a positive electrode active material layer disposed on at least one surface of the collector,
wherein the ratio I₍₀₀₃₎/I₍₁₀₁₎ of a peak intensity I₍₀₀₃₎ of a (003) plane to a peak intensity I₍₁₀₁₎ of a (101) plane of the positive electrode measured by X-ray diffraction analysis is 8 or more.

2. The positive electrode of claim 1, wherein the positive electrode active material layer comprises a first positive electrode active material and a second positive electrode active material, wherein the first positive electrode active material comprises a first lithium composite transition metal oxide in the form of a single particle composed of a single primary particle, or a quasi-single particle which is an aggregate of at most 10 primary particles.

3. The positive electrode of claim 1, wherein the positive electrode has I₍₀₀₃₎/I₍₁₀₁₎ of 8 to 16.

4. The positive electrode of claim 2, wherein the first lithium composite transition metal oxide has a composition represented by Formula 1 below:
[Formula 1] Liₐ₁Ni_{b1}Co_{c1}M¹_{d1}M²ₑ₁O₂
wherein, in Formula 1 above, M¹ is at least one selected from among Mn and Al, M² is at least one selected from the group consisting of Zr, W, Ti, Mg, Ca, Sr, and Ba, 0.8≤a1≤1.2, 0.75≤b1<1, 0<c1<0.25, 0<d1<0.25, and 0≤e1≤0.1.

5. The positive electrode of claim 2, wherein the first positive electrode active material has an average particle diameter (D₅₀) of 2 um to 8 µm.

6. The positive electrode of claim 2, wherein the first positive electrode active material further comprises a coating layer disposed on the surface of the first lithium composite transition metal oxide, and the coating layer comprises at least one coating element selected from the group consisting of Al, Ti, W, B, F, P, Mg, Ni, Co, Fe, Cr, V, Cu, Ca, Zn, Zr, Nb, Mo, Sr, Sb, Bi, Si, and S.

7. The positive electrode of claim 2, wherein the first positive electrode active material further comprises a coating layer disposed on the surface of the first lithium composite transition metal oxide, and the coating layer comprises at least one coating element selected from the group consisting of B, Co, Fe, and Cr.

8. The positive electrode of claim 2, wherein the second positive electrode active material comprises a second lithium composite transition metal oxide in the form of a secondary particle in which at least two primary particles are aggregated.

9. The positive electrode of claim 8, wherein the second lithium composite transition metal oxide has a composition represented by Formula 2 below:
[Formula 2] Liₐ₂Ni_{b2}Co_{c2}M³_{d2}M⁴ₑ₂O₂
wherein, in Formula 2 above, M³ is at least one selected from among Mn and Al, M⁴ is at least one selected from the group consisting of Zr, W, Ti, Mg, Ca, Sr, and Ba, 0.8≤a2≤1.2, 0.75≤b2<1, 0<c2<0.25, 0<d2<0.25, and 0≤e2≤0.1.

10. The positive electrode of claim 2, wherein the second positive electrode active material has an average particle diameter (D₅₀) of 8 um to 20 µm.

11. The positive electrode of claim 2, wherein the weight ratio of the first positive electrode active material and the second positive electrode active material is 1:0.5 to 3.

12. A lithium secondary battery comprising:
the positive electrode for a lithium secondary battery according to claim 1;
a negative electrode facing the positive electrode for a lithium secondary battery;
a separator interposed between the positive electrode for a lithium secondary battery and the negative electrode; and an electrolyte.
